# EUROPEAN PATENT SPECIFICATION

(11) **EP 2 957 080 B1**
(45) Date of publication and mention of the grant of the patent: **10.06.2020**
(21) Application number: 14711615.6
(22) Date of filing: 12.02.2014
(51) Int. Cl.: H04L 12/931, G06F 9/455

(54) **NETWORK CONTROL USING SOFTWARE DEFINED FLOW MAPPING AND VIRTUALIZED NETWORK FUNCTIONS**
NETZWERKSTEUERUNG MITTELS SOFTWAREDEFINIERTER DATENSTROMKARTIERUNG UND VIRTUALISIERTEN NETZWERKFUNKTIONEN
COMMANDE DE RÉSEAU À L'AIDE D'UN MAPPAGE DE FLUX DÉFINI PAR LOGICIEL ET DE FONCTIONS DE RÉSEAU VIRTUALISÉES

(30) Priority: 12.02.2013 US 201361763539 P
(43) Date of publication of application: 23.12.2015
(73) Proprietor: Hewlett Packard Enterprise Development LP, Houston, TX 77070 (US)
(72) Inventor: BARKAI, Sharon, Los Altos, California 94024 (US); SHELEF, Nachman, 6912012 Tel-Aviv (IL); KAEMPFER, Gideon, 4336901 RaAnana (IL); NOY, Ariel, 4637142 Herzlia (IL); BAR-ELI, Eldad, 4702713 Ramat-HaSharon (IL); SIDI, Ron, San Jose, California 95128 (US)
(74) Representative: Haseltine Lake Kempner LLP
(86) International application number: PCT/IL2014/050154
(87) International publication number: WO 2014/125486

(56) References cited:
- EP-A1- 2 579 527
- US-A1- 2007 106 992
- US-A1- 2010 257 263
- US-A1- 2012 147 898
- US-A1- 2013 125 124

## Description

### FIELD AND BACKGROUND OF THE INVENTION

The present invention, in some embodiments thereof, relates to control of electronic networks using software defined flow mapping and virtualized network functions and, more particularly, but not exclusively, to use of software defined flow mapping for scaling of virtualized network functions.

A recent Software Defined Networking (SDN) trend aims to increase network innovation and open it up to modernization and advanced new network services.

The basic principle of SDN is that by separating network control from physical forwarding and from physical topology, a veil of complexity is lifted, allowing greater flexibility and providing room for network innovation.

Specific standard technologies in use in networks in general include but are not limited to:
1) ONF OpenFlow: an interface that allows the control-forwarding touch point to be based on whole conversation flows rather than per packet, and allows for separation of control software from forwarding hardware and firmware.
2) IETF Location Identity Separation Protocol (LISP): a protocol initially conceived to preserve route-able IP addresses by allowing Internet Service Providers to use private addresses by specifying an Overlay and Mapping database service.

Initially conceived as a way to conserve routable addresses in the Internet the LISP architecture allows ISPs to allocate their own private unique address spaces and encapsulate packets that use these addresses in formal routable headers. To do that LISP introduces a global network mapping service that can map in real-time between identity addresses and location (routable) addresses.
3) ETSI Network Function Virtualization (NFV): a list of guidelines for the type of network functions network operators would like to see virtualized from proprietary boxes to software functions running on standard compute hardware.

US 2010/0257263 A1 discloses a method and apparatus for implementing and managing virtual switches.

### The overarching problem of network functions

According to recent publications by key Network Operators [NFV White Paper] carriers are challenged by the fact that their infrastructure is "populated with a large and increasing variety of proprietary hardware appliances". To paraphrase the problem expressed - launching new network services requires a variety of complex slow and costly procedures - from finding the space and power to accommodate new hardware units, hereinafter boxes, energy and capital investment, and the scarcity of skills necessary to design, integrate, connect and operate increasingly complex multi-generation functional appliances into the data-path. This reality requires operators to keep running in terms of CAPEX and OPEX efforts in order to stay in the same place as far as services and revenue. Current methodologies do not facilitate innovation in terms of services and business models very well - the kind clearly demonstrated by hternet and Over the Top providers.

### Reasons for virtualizing network functions

Operators would like to see their Network Functions virtualized, which in their expressed view means to consolidate many network equipment types onto industry standard servers, switches and storage, which could be located in Data Centers and Network Nodes. The above may enable:
Reduced equipment costs and power through consolidation and the use of COTS hardware and software.

Increased speed of maturation reducing Time to Market by minimizing the cycle of innovation.

Sharing of resources across services and across different customer bases.

Targeted service introduction based on geography & demographics, rapid scale out.

A wide variety of eco-systems, and
Encouragement of network openness.

Network functions may include a software-based DPI, providing advanced traffic analysis and multi-dimensional reporting, and showing the possibility of making off-the-shelf hardware work at actual line rates.

Software-based DPI can be pervasively deployed in the network using NFV, providing better analysis capabilities, as well as simpler mechanisms for deployment, update, testing, and to scale it to changing workloads since a virtual machine is used.
- IP node implementations, supporting - for example, but not limited to: CG-NAT and BRAS capabilities on standard high-end servers, offering the opportunity for an effective re-use of hardware as the demand for such capabilities evolves.
- The virtualization of services and capabilities that presently require dedicated hardware appliances on customer premises (home environment to small branch office to large corporate premises), including but not restricted to: firewall, web security, IPS/IDS, WAN acceleration and optimization, and router functions. The virtualization of the home environment including routers, hubs and set top boxes would potentially enable a simpler and seamless migration to IPv6, reduce energy consumption and avoid successive hardware updates as broadband applications and services evolve.
- The virtualization of Content Distribution Networks (CDN), with the initial goal of extending and scaling Content Delivery Services more easily, and also with the objective of maximizing hardware re-use in PoPs by being able to install other Service Delivery Applications (e.g. Web Acceleration) on demand. Virtualization of CDNs will also allow the hosting of CDN services from potential business partners, like external CDN providers.
- The virtualization of a mobile core network targeting at a more cost efficient production environment, which allows network operators to cope with the increasing traffic demand in mobile networks, and leading to better resource utilization (including energy savings), more flexible network management (no need to change hardware for nodes' upgrades), hardware consolidation, easier multi-tenancy support and faster configuration of new services.

Network Functions Virtualization in mobile networks can also be used to create core network instances optimized for specific services, e.g. for Machine-to-Machine communications (M2M).
- Co-ordinated implementation of cloud and networking for enterprises, allowing on-demand services to be offered and providing capital efficiency for enterprise customers and network operators.
- Hybrid fibre-DSL nodes are currently located deep in the external network in street cabinets, underground and on poles. These nodes must be very low power consumption and very low/zero maintenance to be economic. Virtualization could be used to reduce hardware complexity at the remote node, saving energy and providing an enhanced degree of future proofing as services evolve. These remote nodes could more economically provide both fixed and wireless access if key functions were virtualized on a common platform.
- Network Functions Virtualization can also be used to provide an efficient production environment which can commonly be used by different applications, users and tenants, thus supporting the coexistence of several versions and variants of a network service.

Unlike the Monolithic form factors, virtualized network functions can be unbundled both in terms of capacity, for example being able to serve only a few hundred end-customers using a few CPU cores, versus being able to serve a few hundreds of thousands of customers on a proprietary box with lots of blades of compute power and proprietary backplane, or being configured to apply only a limited set of functions versus turning on multiple in- line high-function options. Such downsizing of network functions allows for dynamic and elastic allocation of capacity, and a more flexible and adaptive programming of the functionality each network function type should apply. It also requires a relatively simple port of exiting code into a virtual machine form factor that holds both the existing logic, standard interfaces, and proprietary operating system used by the NFV supplier.

### Why Virtualized Network Structure is Difficult

The problem statement of the proprietary box environment and related benefits of virtualization are so clear that they raise the question of why network operators infrastructure is not already organized like most other verticals i.e. IT Data-centers. Typical Data- Center applications do not need to introduce new physical boxes, integrated by complex switching- routing-steering rules just to add functionality. There are quite a few reasons why carrier applications are built this way, some are anchored historical and evolution aspects of the segment, but in fact until relatively recently such an opportunity was not very feasible technically due to basic performance inhibitors of standard servers, and standard IT technologies.

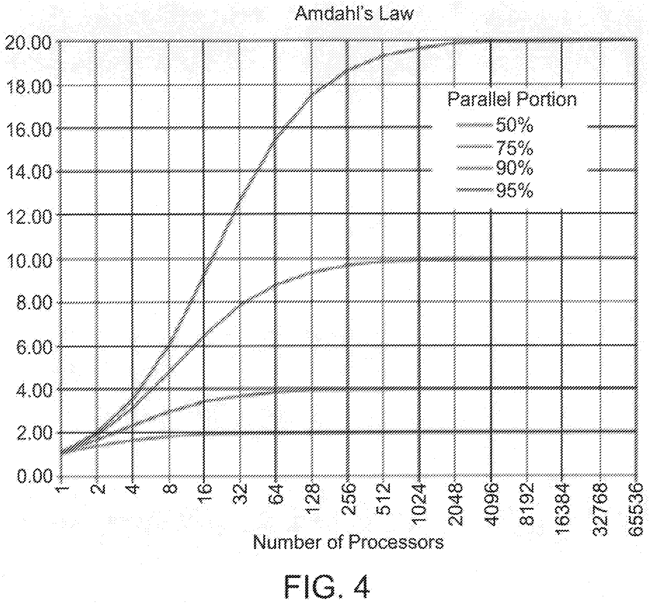

In recent years, the way in which basic server technology is able to meet Moor's performance curves has been by using multi-core / multi-threaded compute concurrency. As shown in Fig. 4, according to Amdahl's law multi-core/ multi-thread compute concurrency is the decisive factor in achieving performance and therefore allows for the migration of network functions from highly concurrent proprietary boxes to standard servers. In actual reality a number of vendors have already taken advantage of these recent abilities of servers, yet these vendors still package their server based products as appliances. This is a direct result of the current design and integration models applied by network operators which are geared towards the core high function proprietary appliances working in this mode. These core functions include the lion share of subscriber mobility, quality, security management, content and IP media application management.

In order for key carrier functions such as Broadband Remote Access Server (BRAS), mobile evolved packet core (EPC), IP multimedia subsystem (IMS) etc. to migrate to virtualized form factor a more substantial migration is required, migration to a dynamic integration model that can engage standard servers at high average utilization versus today's typical utilization, and can make up for the efficiency loss while achieving the operations and innovation gains.

Dynamic application models that operate this way exist today and are in massive use by Internet service providers, however the software used by these providers is geared for dynamic mapping of function to compute from the ground up. The variety of Google, Yahoo, and Facebook applications are able to take advantage of points of presence, clusters, servers, and cores within each server to adapt quickly to changing demands as they are based on a common map-reduce infrastructure. Carriers which are regional by nature, and do not write their own application code do not have this luxury. Even if a number of vendors take the initiative, as a few startups have, and re-write some of the existing (millions of lines of) code that make up the carrier functions it would take years to fully test and debug the thousands of interoperable interfaces embedded in these functions. Such point efforts will limit the choice available today for each such function, and will not solve the innovation derived by combing and tailoring services using functional building blocks, for example serving consumers, businesses, humans, cars, surveillance cameras, and meters using the same physical infrastructure. There is a risk that quite a few functions may be left out and block the migration.

### SUMMARY OF THE INVENTION

According to a first aspect of the invention there is provided a method, as defined by appended claim 1. According to a second aspect of the invention there is provided an electronic network, as defined by appended claim 11.

The present embodiments may combine SDN technologies together with concepts taken from LISP and distributed database technologies in order to provide scalable infrastructure enabling implementation of NFV concepts with minimal need to alter existing network function logic. The embodiments may thus leverage SDN to virtualize monolithic functions such as carrier network functions with minimal re-architecture or re-writes. This is achieved by offering north-south map-reduce and east-west flat-mobility as network services. It uses existing structures, including standards-based structures to scale size and capacity as building blocks for a solution which may be robust and provide scalability.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a simplified flow chart illustrating use of software defined flow control together with an address overlay to scale network function virtualization according to embodiments of the present invention;
FIG. 2 is a simplified schematic diagram illustrating layers within a network according to embodiments of the present invention;
FIG. 3 is a view of the network of FIG. 2 in greater detail;
FIG. 4 is a graph of Amdahl's law;
FIG. 5 is a simplified schematic diagram illustrating SDN layers over an NFV layer according to an embodiment of the present invention;
FIG. 6 is a simplified schematic diagram showing the passage of a data flow from a mobile device to a virtual machine according to an embodiment of the present invention;
FIG. 7 is a schematic block diagram illustrating distributed mapping according to the present embodiments; and
FIG. 8 is a simplified diagram illustrating network management components according to the present embodiments.

### DESCRIPTION OF SPECIFIC EMBODIMENTS OF THE INVENTION

The present invention, in some embodiments thereof, relates to network flow control and, more particularly, but not exclusively, to using software defined flow control to scale network function virtualization.

The present embodiments may offer specific methods and an apparatus that allows software defined networks methodology to be used for virtualizing previously Monolithic functions and applications, for example carrier applications such as Evolved Mobile Carrier Packet Cores (EPC), IP Multimedia Subsystem Cores (IMS) and similar. SDN can facilitate such virtualization without a major re-write and re-architecture of these functions so that they can run on standard compute platforms and standard virtual machines. The present embodiments may use a combination of proven standard technologies as components, technologies that offer the following capabilities: Flow based Switching, Distributed Encapsulated Overlays, Distributed In- Network Databases, combined together form a software defined network (SDN) solution for network functions virtualization (NFV).

### Leveraging Server and Network Virtualization

Network and Server virtualization can play a key role in offering a scalable model for network function virtualization. The virtual machine (VM) offers a convenient porting mechanism of existing network function code to server executable format, including standard interfaces, and proprietary vendor operating systems, but excluding the high performance compute, proprietary backplanes, and hardware acceleration abilities.

So in fact for each function, network virtualization leads from specific hardware boxes that bundle X functions for Y amount of traffic, to many smaller, that is to say multiple cores, of downsized virtual boxes that can serve orders of magnitude less traffic and a potentially reduced set of functions. The question now becomes how to engage these "RISC" building blocks to high capacity high utilization dynamically programmable whole systems. For this task we turn to network virtualization and specifically to Software Defined Network virtualization and OpenFlow.

SDN as a general trend aims to increase networking innovation, addressing problems such as the one described above by a simple principle of decoupling network control from physical forwarding and decoupling network control from physical topology. Indeed using this principle SDN can solve the problem of producing high-capacity, high-function, and high- utilization solutions from micro partitioned virtualized network functions replacing monolithic deployment models. This can be done using a fully distributed, open, and standards based architecture of "Flow- Mapping". Flow-Mapping is used to globally determine which virtualized network function VM (NFVM) is applied to what portion of the traffic, in what sequence, producing a whole solution without harming the existing code and long-lived embedded states, and without centralizing any of the components or assuming an any kind of all-knowing remote controller. Service chaining is one of the main NFV use cases.

Three basic tiers may be used to organize the solution. At the core is a traditional topological IP network that comprises a private backbone connecting points of presence and the spines connecting Data-Center racks. The topological IP network is built from the traditional layers 1-3 of networking capable of connecting the hundreds or thousands of standard compute locations that host the NFV's using standard bridging & routing protocols.

The second tier, an SDN tier, is used to aggregate standard compute resources and to insulate the standard bridging & routing from the vast amount of identities the SDN tier is aware of in order to make the right flow mapping / flow forwarding decisions. Depending on the SDN nodes aggregation capacity, the traditional and in-place core-spine network need only be aware of hundreds to thousands of these aggregation nodes. These SDN nodes form a distributed overlay and encapsulate the millions of forwarded flows between them.

The SDN nodes according to the present embodiments have three functional sub-tiers in order to be able to perform flow-mapping: A global mapping service, Flow handlers, and Flow Switching. These will be discussed in greater detail hereinbelow.

The third tier in the present embodiments is the NFV tier. The NFV tier hosts the now virtualized functions on physical standard server hardware. The NFV tier uses a Hyper-vizor operating system in order to allocate CPU cores, basic storage, and network interface capacity to each of the NFVM images running on the server. The NFVMs contain carrier subscriber and application management logic, and typically are able to deal with roughly a Gigabit of traffic each, depending on the compute intensity. Naturally once a specific NFV starts handling a specific subscriber for a specific application thread it may create in-memory and long lived (minutes) states in order to function properly. And so the mapping of which traffic flow reaches which NFVM in what sequence cannot be random and cannot depend on the specific interface it is originally received on.

The assumption is that every solution element; subscribers, applications, links, and virtual machines, moves. Hence, according to the present embodiments, the location identity separation protocol, LISP, may be used to provide overlay addresses for the virtual machines, which overlay addresses may remain with the virtual machines as they move. The data flows use the overlay addresses and thus are able to reach the correct NVF irrespective of it having moved.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of being practiced or carried out in various ways.

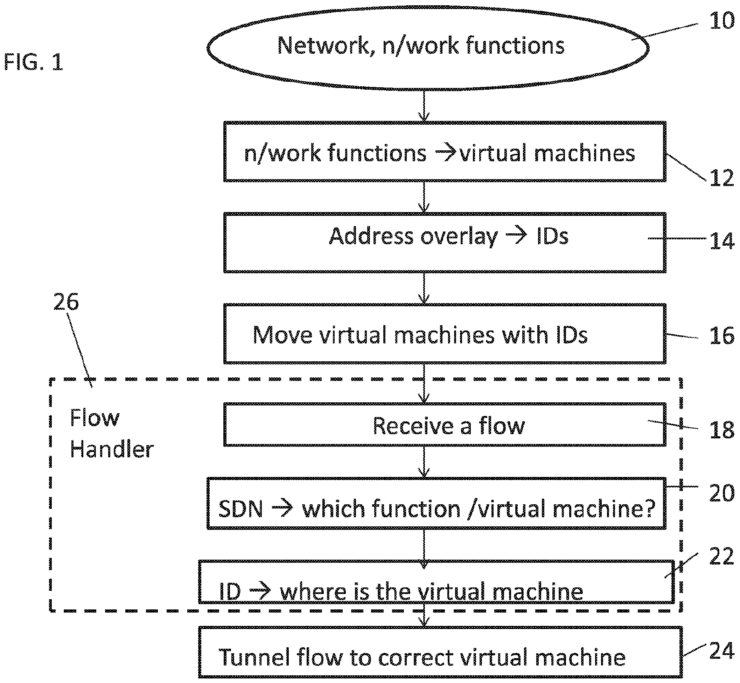

Referring now to the drawings, Figure 1 illustrates a method for operating an electronic network 10. The network has a hardware layer made up of hardware components including spines, blades, servers and datacenters, and uses network functions, and may be divided into subnets. The underlying network typically uses the IP (Internet protocol) or a derivative thereof.

The networked functions are virtualized 12 and implemented on virtual machines.

An addressing overlay is provided 14 above the hardware layer of the network, and provides identities to entities on the network, including the virtual machines. The identities are virtual identities but map to hardware locations on the underlying hardware layer, preferably via a network global mapping table or function. The mapping table may for example be implemented on a distributed database (DB) such as Cassandra, Aerospike, MongoDB or other NoSQL DB.

The virtual machines are able to and indeed are assumed 16 to move around the different hardware components of the network, and when they do, the identities provided by the addressing overlay move with the virtual machines. The mapping table however would be updated about the new hardware location.

Directing data flows around the network via the virtual machines is the subject of stages 18 - 24, and these are handled by flow handler 26. The flow handler 26 receives a data flow 18, uses software defined flow mapping to determine which function and which virtual machine the data flow is to be directed to 20, and then uses the ID to determine 22 where the selected virtual machine is. Finally, in stage 24 the flow handler wraps the flow to form a tunnel to the correct virtual machine, and the flow reaches the correct machine even if it has moved. More precisely, the flow handler may receive a trigger indication of the existence of new flows. Upon the reception of such a trigger it may perform the mapping as described and then may configure SDN switching hardware, for example OpenFlow switches, as discussed in greater detail below, with rules that define where the flow should be forwarded to. Any following traffic of that flow no longer needs to reach the flow handlers once the rules are in place. Encapsulation for tunneling may also be taken care of by the SDN switch.

The flow is not an individual packet but rather a series of packets all having the same header or other identification. Typically the series belongs to a single service being provided by one network entity to another.

The addressing overlay may comprise a distributed hash table mapping service where a key hashed at any location of the software defined flow mapping finds the SDN controlled flow switching node closest to and in control of the particular virtual machine.

The software defined flow mapping thus decouples network control from physical forwarding and from physical topology, since the network control is based on the IDs and the physical forwarding and the physical topology are not required until the IDs are hashed into physical addresses. Even so, the flow mapping may only know and monitor the routes between flow control nodes.

The software defined flow mapping may comprise flow handling, flow switching and global mapping.

The software defined flow mapping has locations as mentioned above. These locations may be provided in a software defined aggregation overlay comprising software aggregation nodes. The aggregation nodes in turn may be connected by openflow switches, which are a form of flow switching node or flow switch.

The addressing overlay may use publish and subscribe functionality for updating of mapping changes. Thus if a virtual machine moves, the global mapping table needs to be updated and the layer may thus publish the update to any node that subscribes to such updates.

An architecture of the addressing overlay may form an administrative domain cloud network that maps said flows.

A tier of the software defined flow mapping (SDN) may be based on an architecture of the addressing overlay. The nodes may be a set of symmetrically distributed nodes. At the top of each node a portion of a global mapping service may be located. Subsequently, it may be possible to retrieve hash values from keys, the keys being the IDs referred to above, by hashing a key at any of the nodes to provide the location of the desired virtual machine. The key is the ID of the virtual machine.

The flow handler 26 directs a flow to the node aggregating data for the given virtual machine assigned to the flow. The assignment uses an application specific identifier and/or a protocol specific identifier.

The SDN tier may be agnostic to the topology of the hardware layer, but, as explained, utilizes information of connections linking the distributed nodes.

The SDN tier may track round trip and delay between the distributed nodes, for example to help choose between alternative pathways offered by the hardware.

The software defined flow mapping may use the open flow protocol. - and the addressing protocol may use the LISP protocol.

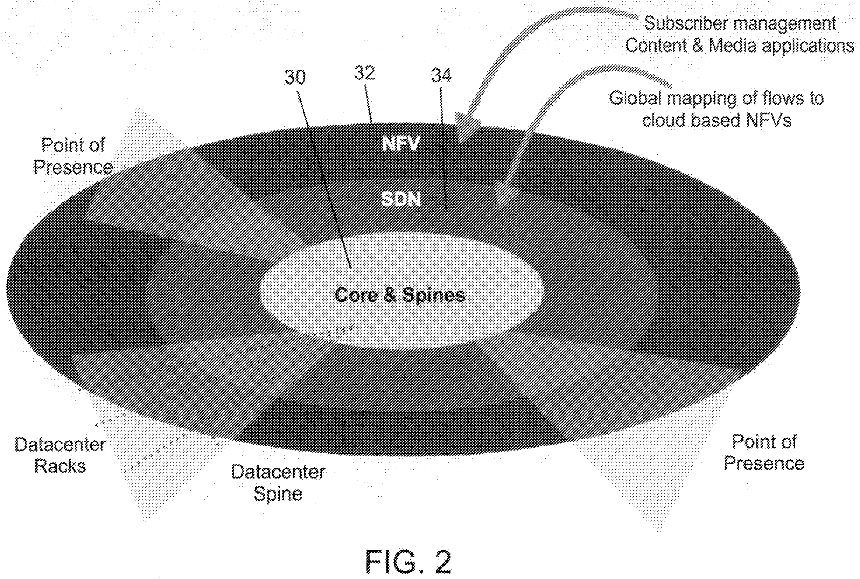

Reference is now made to Fig. 2, which is a simplified schematic diagram that illustrates an electronic network using network functions to manage data flows on the network.

The network comprises a hardware layer 30 comprising hardware components such as servers, a data center spine, switches, routers and points of presence (POPs).

Virtual machines are instantiated on the hardware components, typically servers, and can move around between the hardware components. The virtual machines implement different network functions. Although the virtual machines work on the hardware, they are in fact part of the NFV layer 32.

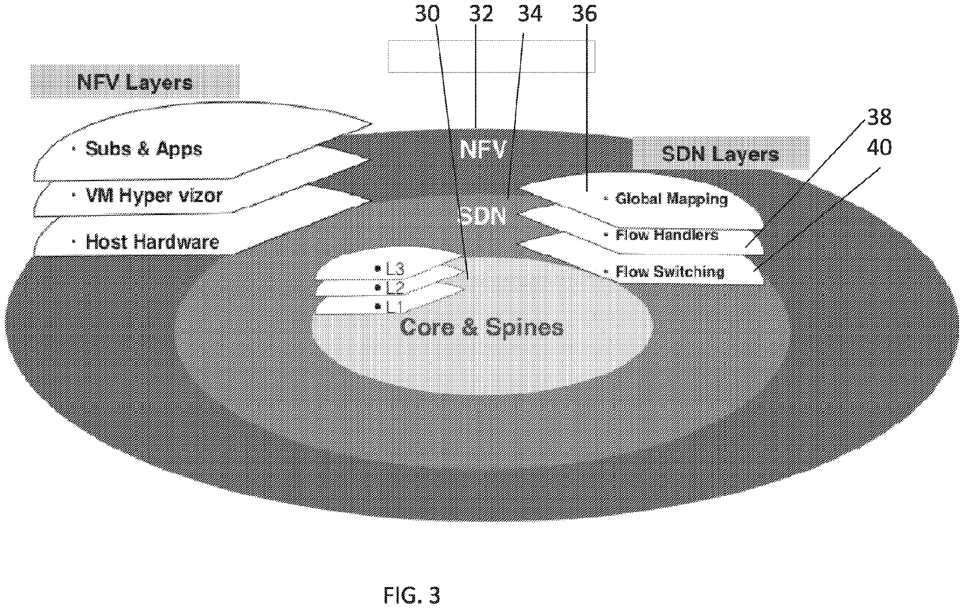

Layer 34 is the software defined networking layer and controls data flows and their movement around the network. Layer 34 is shown in greater detail in Fig. 3, where it is seen to comprise a global mapping sublayer 36, a flow handler 38 and flow switching 40.

The global mapping sublayer 36 is an addressing overlay above the hardware layer 30. The addressing overlay provides locations that go with the identities of the virtual machines and other network entities, their identities remaining with the virtual machines irrespective of which of the hardware components, such as servers, a respective virtual machine currently resides on.

a flow handler or controller 38 directs the data flows around the network via the virtual machines as discussed above using software defined flow switching. The flows are directed among the virtual machines using the identities to query the locations of the virtual machines.

Network Functions Virtualization (NFV layer) 32 is now considered in greater detail. The NFV layer is applicable to any data plane packet processing and control plane function in mobile and fixed networks. Potential examples of network functions that are or can be virtualized include (not in any particular order):
- Switching elements: BNG, CG-NAT, routers.
- Mobile network nodes: HLR/HSS, MME, SGSN, GGSN/PDN-GW, RNC, Node B, eNode B.
- Functions contained in home routers and set top boxes to create virtualized home environments.
- Tunneling gateway elements: IPSec/SSL VPN gateways.
- Traffic analysis: DPI, QoE measurement.
- Service Assurance, SLA monitoring, Test and Diagnostics.
- NGN signaling: SBCs, IMS.
- Converged and network-wide functions: AAA servers, policy control and charging platforms.
- Application-level optimization: CDNs, Cache Servers, Load Balancers, Application

Accelerators.
- Security functions: Firewalls, virus scanners, intrusion detection systems, spam protection.

Moving now to the SDN layer 34, the present architecture is made of SDN aggregation nodes in various locations such as datacenter racks, blade-servers, and points of presence in each of which there are standard compute resources able to run virtualized network functions.

It does however open up the problem of which NFV instance does what to what portion of the traffic and when, which is addressed by the specific SDN aggregation architecture presented below.

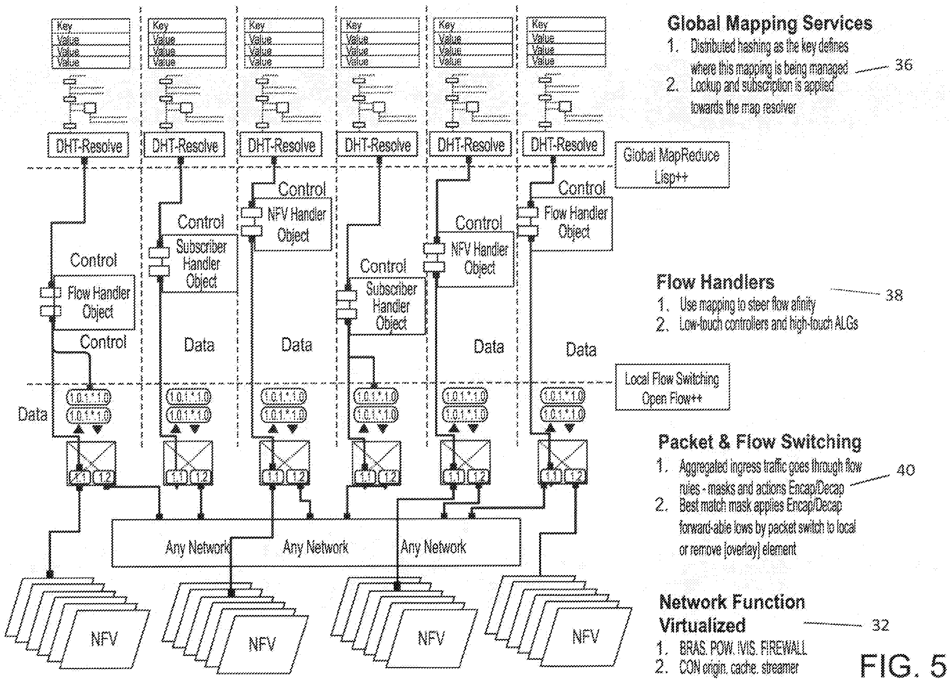

Reference is now made to Fig. 5 which shows the three sub-layers of the SDN layer 34 above the NVF layer 32. In order for the external SDN nodes to be able to dynamically assemble the right capacity and functionality of the now virtualized NFV building blocks we may define their specific structure as follows:
1) A flow switching tier 40 at a lowest level is able to classify incoming flows and steer them either into an SDN aggregation node, or down to the aggregated NFV elements, or up towards the core of the network. Such a lowest level flow switching tier supports encapsulation-decapsulation of packets so that any IP network can be used to connect the SDN aggregation overlay, and so that the end-points are not aware of the existence of the SDN overlay network. More particularly, SDN aggregation nodes are interconnected via tunnels such as LISP, VXLAN, NVGRE, GRE or other types of well-known tunnels which allow forwarding traffic over an arbitrary underlying IP network. The flow switching tier can be implemented using OpenFlow switches. OpenFlow is a communications protocol that gives access to the forwarding plane of a network switch or router over the network, and separates control from forwarding, and
2) A mapping tier 36 at the top, able to look up and map any key to any range of values, and to do so in a distributed manner, e.g. direct mapping of queries to different map resolvers depending on the distributed hash value of that key, to avoid bottlenecks. The mapping tier may be implemented using LISP MMAP services. Lookup and posts of key-values mappings can optionally be published-subscribed. Thus, if the looked up values are changed an unsolicited notification of the new values is delivered. It should be noted that the mapping service allows the mapping of an ID to a location. The details of implementation of the mapping service are not explicitly defined by LISP but several options are proposed including DHT as well as hierarchical lookup mechanisms similar to DNS such as DDT. The use of DHT is a preferred option.

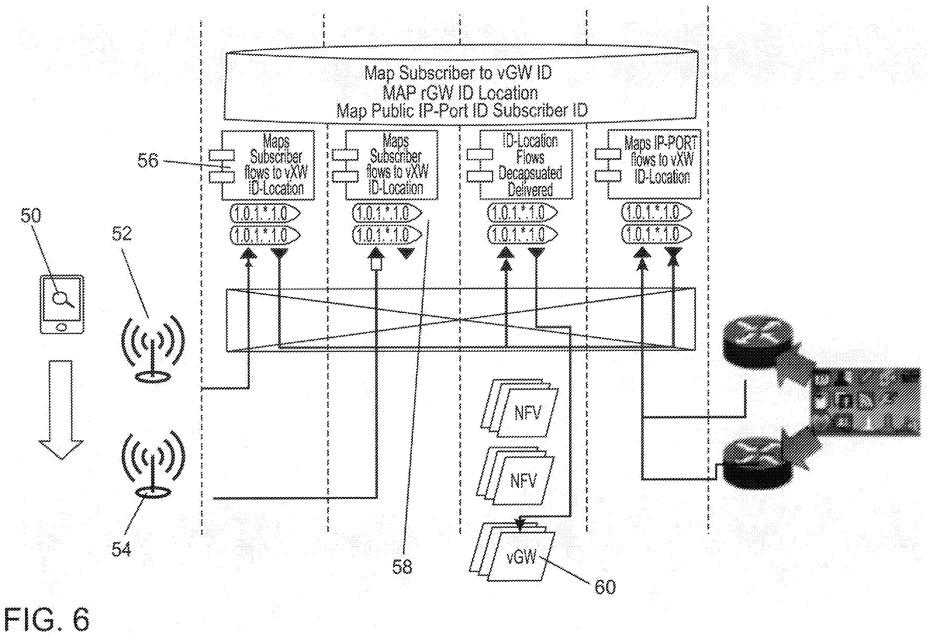

In each SDN aggregation node one may fit specific flow handlers - the intermediate tier 38 - between the flow-switching tier and the mapping service. The handlers use the tiers as ordered to deliver the required SDN NFV assembly functionality in a modular and extendible manner. The SDN NFV functionality is basically the following:
Reference is now made to Fig. 6 which is a simplified diagram illustrating an example of data flows using the present embodiments. A mobile phone user 50 produces a flow of data which is picked up in parts by two base stations 52 and 54. The headers in the packets including information of the protocols, source and destinations and any other identification information are the same, and thus independently of the routes taken by the packets, the flow handlers 56 and 58 map the flows to the vXW virtual network function instance. The subscriber is then mapped to the vGW virtual machine identity 60, whose physical location is then found, and a tunnel or port is set up to handle the flow.

To achieve this, upon the identification of the new packet flow or upon the indication of pending arrival of such a flow, for example from an orchestration system, each Flow Handler 56, 58 determines the service that the given mobile phone should receive. The service information may be retrieved from the mapping service or from another source of information such as a AAA, PCRF or orchestration system. Once the service information has been determined the Flow Handlers determine the specific Network Function VM instances to provide the service. This may be based on algorithmic logic or again on a lookup into the mapping service or other form of database.

Finally, once the desired NF VM instance has been established, its ID is used to query the mapping service in order to retrieve its location. The Flow Handlers can then configure the flow switches with new rules causing data packets coming from the mobile phone to reach the correct NF VM instances as desired: vXW and vGW.

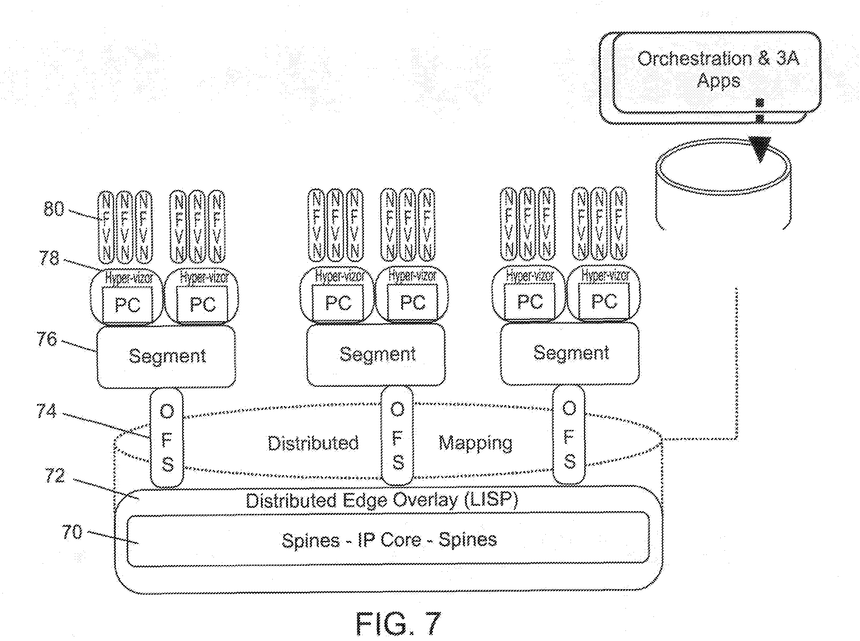

The SDN overlay schematics may be modeled based on the IETF-LISP architecture [LISP Architecture RFC] shown in Fig. 7 to which reference is now made. The hardware core 70 is enveloped by the distributed edge overlay 72 which provides virtual identities for the hardware addresses. The mapping is global but distributed in segments 76 held at nodes 74. The nodes are hosts to hardware 78 here shown as PCs that host virtual machines 80.

The LISP mapping service is an in-network database, meaning it uses the standard network in order to scale the real time indexing capacity. The LISP architecture, with minor modifications such as publish-subscribe in addition to lookup, can be used to form a single administrative domain cloud network that maps flows and may solve the NFV scaling problem.

We can define the SDN tier based on the LISP architecture using a set of distributed nodes, as mentioned above. At the top of each node we place a portion of the global mapping service. Globally significant key-values can be retrieved by hashing each key to an SDN location address that holds the values. This quality will be used to linearly scale the flow-mapping capacity with the number of SDN aggregation nodes.

At the bottom of each SDN aggregation node we place a flow switching tier 40, as mentioned. Flows are a set of packet header patterns that have local scope only at the flow switch where they have been defined. Therefore each packet in every flow processed by a local SDN node may be encapsulated using a header and address that are meaningful to the core bridging & routing tier of in terms of how the flow should be forwarded. The global intent of the forwarding overlay using the core tier is derived from the global mapping resolutions by flow handlers.

Between the global-mapping and the flow-switching tiers of the SDN node we place flow handlers 38, as discussed. Flow handlers are registered in the local flow switch and use the global mapping in order to further provision the flow switching and steer flows appropriately. As discussed above in respect of Fig. 1, Flow handlers receive indications of new flows, make decisions regarding where the flow should be sent to, map the ID's of the VM entities to which the flows should go to a location in the network using the mapping service and instruct the flow switches to forward the flows to those locations.

A flow handler 26, 38, may make sure that traffic destined to a specific NFVM will be encapsulated, by the flow switch it is connected to, to allow forwarding in a tunnel of the overlay network to the correct SDN node that aggregates that NFVM. That information is registered in the mapping service by the aggregating node, and is retrievable from the SDN nodes that are hashed as the key-store resolution coordinate. Similarly additional information such as specific access control considerations can be resolved by the handler using the mapping resolver service. More particularly, the location of a VM is registered in the mapping service by the SDN node aggregating the VM. When a VM moves to a new location, the new local SDN aggregation node learns about the presence of the VM either from the VM itself via explicit protocol or network activity (e.g. ARP packets) or via out of band messages from an orchestration system such as OpenStack or other form of Cloud Management System (CMS).

Such a default virtual layer 2 or VL2 flow handler is an obvious use and its benefits for generic cloud networking have been discussed considerably in other contexts using multiple global awareness methods. However horizontal flat networking is not enough to solve the NFV flow mapping problem. For that we need to enable the architecture to plug-in a variety of additional handlers that are able to map the right flows to the right NFV by a wide range of protocol and application specific identifiers.

To illustrate this point we can look at a basic example of virtualizing the mobile gateway functions of evolved packet cores (vEPC). When user traffic reaches the NFV POP or data-center it will typically be encapsulated by the topological address of the access eNB and the virtual address VIP of the Mobile Gateway.

The specific user traffic needs to reach the same NFV which handles its state even if the user traffic shows up in a different encapsulated tunnel (GTP), or if that same traffic ends up in a different data-center aggregation point because of a bridge/route/link topology change or because the previous rack is now down. The dynamic environment assumptions must now be considered the norm rather than the exception as was the case in large Monolithic solutions.

Moreover, the subscriber traffic may eventually end up NATed, that is connected, say from multiple devices using network address translation, and forwarded to the Internet using a public IP and a specific port range which know nothing about the multiple devices. On the return path from the Internet the traffic needs to reach that same NFVM that contains the subscribers mobility state and carrier specific credentials. These mappings; subscriber ID to best available initial vGW, subscriber ID to current vGW, vGW NFVM to location, IP-port to subscriber ID ... require a powerful "Pull" type mapping service, and specific handler for each of the standard protocols terminated by NFVs, for example GTP, Diameter, SIP, etc. Additional and likely considerations for vEPC flow mappings include tenancy considerations for Mobile business services, overflow considerations to other data-centers, upcoming maintenance windows and software upgrades.

### F low Mapping Traffic Management

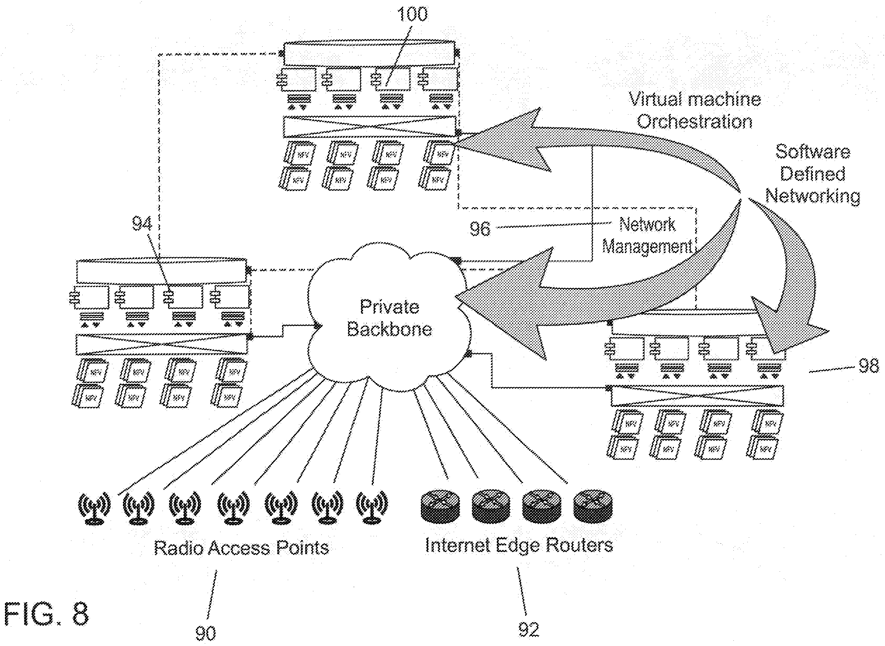

Reference is now made to Fig. 8, which is a simplified diagram schematically showing network management as a block diagram. Radio access points 90 and internet edge routers 92 connect to a private backbone 94. Network management 96 uses software defined networking 98 including the LISP overlay to manage virtual machine orchestration 100.

As described so far, flow-handlers make globally aware decisions and provision flow switching by using the distributed global mapping service. These decisions implement both vertical application specific map- reduce load-balancing features, and horizontal flat virtualization mappings. No other method need be applied in order to populate and retrieve global information such as affinity, location, health & load of NFVM. There is however an additional global awareness requirement that can only be derived in-line and cannot be derived from the global mapping, and that is the flow mapping traffic management.

The SDN overlay tier may be agnostic to the topology of the underlying core-spines network, and it is not aware of re-routing or link failures occurring within the core intermediate junctions. However the SDN tier may be aware of the end-to-end conditions at all times. e.g. any SDN node to any other node. Without such awareness the quality of the overlay solution will be poor and subject to potential thrashing during stress spikes.

When SDN overlays spine networks it is noted that modern data-center spine-leaf design may allow for multiple all-active paths between any of the rack locations. This is typically achieved by lining-up multiple spine switches, each with hundreds of ports, and each connecting to all the cluster racks. So for example if five spine switches are used to connect a cluster there are five different ways for each SDN aggregation node to connect to each of the other SDN aggregation nodes in the same cluster. It is therefore important for the SDN aggregation node to be aware of the multiple interfaces to the spine each node has, and that periodic in-line measured round trip delay (RTT) is used to determine queue buildup, and that the mapped flow counter information together with the queue build-up information is used to keep all available links balanced, and to quickly recover flow mapping from loss of any of the hundreds of links that connect the SDN tier to the datacenter spines.

When the SDN tier overlays core backbone links a close account of round trip delay and build up may be kept. In the wide area network, multiple paths are usually made available by network management static provision of multiple VPNs. These VPNs differentiate between the different interfaces each SDN node can use to overlay the core network. Such multi-link information is used in real-time to avoid costly loss of flow packets over the wide-area network (WAN) and may also be sampled into the mapping service so it can be used for flow mapping decisions that can select from a few remote location options for overflow or for specified processing.

To summarize, the SDN solution may help scale network function virtualization by allowing a simple port of existing functionality to down sized virtual machines. The overall solution is organized into three basic tiers; orchestrated NFVM endpoints, a managed spine-core topological network, otherwise referred to as the hardware layer, and dynamically programmable flow-mapping software defined networking tier in-between.

The proposed LISP based implementation of flow mapping offers a North - South semi-generic NFVM map-reduce service, and an East - West wire-speed flat connection-separation of VMs. The combined service by SDN to the NFVM is Recursive and can be applied per function and sub-function tailored per each possible branch. The solution may be Standards-Based, namely LISP and OpenFlow, and is open for extension using flow-handlers registered in the Flow Switching sub-tier and using the global Mapping sub-tier. The solution may be Fully-Distributed and can be Symmetrically Distributed for easy packaging. Such a distribution allows for dynamic Scale-out and resilient high-availability, important qualities for large carrier class solutions. The solution includes built-in flow mapping traffic management as an overlay, traffic management which is end-to-end round trip measurement based and does not add complex peer to peer signaling to the solution.

It is expected that during the life of a patent maturing from this application many relevant communications mapping and virtualization technologies will be developed and the scopes of the terms "software defined flow mapping" and "virtualized network functions" are intended to include all such new technologies a priori.

The terms "comprises", "comprising", "includes", "including", "having" and their conjugates mean "including but not limited to".

The term "consisting of' means "including and limited to".

As used herein, the singular form "a", "an" and "the" include plural references unless the context clearly dictates otherwise.

It is appreciated that certain features of the invention, which are, for clarity, described in the context of separate examples, may also be provided in combination in a single example, and the above description is to be construed as if this combination were explicitly written. Conversely, various features of the invention, which are, for brevity, described in the context of a single example, may also be provided separately or in any suitable sub-combination or as suitable in any other described example, and the above description is to be construed as if these separate examples were explicitly written. Certain features described in the context of various examples are not to be considered essential features of those examples, unless the example is inoperative without those elements.

Although the invention has been described in conjunction with specific examples thereof, it is evident that many alternatives, modifications and variations will be apparent to those skilled in the art. Accordingly, it is intended to embrace all such alternatives, modifications and variations that fall within the scope of the appended claims. The invention is defined by the claims as appended.

To the extent that section headings are used, they should not be construed as necessarily limiting.

## Claims

1. Method for operating an electronic network (10), the network having a hardware layer comprising hardware components and requiring network functions, the method comprising:
virtualizing (12) networking functions to virtual machines;
using (14) an addressing overlay based on a location identity separation protocol, LISP, said addressing overlay using a distributed hash table mapping service, said
mapping service being global to said electronic network and
above a hardware layer of said network, said addressing overlay providing identities of said virtual machines, and global mapping of said identities to hardware locations at which a respective virtual machine currently resides;
defining a tier of software defined flow mapping based on a LISP architecture of the addressing overlay, said defining comprising using a set of distributed nodes, placing at a top of each node a portion of the global mapping service provided by the addressing overlay, and subsequently retrieving key-values by hashing a key comprising an ID of the virtual machine to find one of said distributed nodes closest to, and in control of a given virtual machine that holds a portion of said global mapping service associated with the given virtual machine,
moving (16) respective ones of said virtual machines around different hardware components of said network, mapping of said identities being updated with said moving of said virtual machines;
directing (18, 20, 22) data flows around said network via said virtual machines using software defined flow switching, said flows being directed among said moving virtual machines using said identities.

2. The method of claim 1, wherein the software defined flow mapping is provided in a software defined aggregation overlay comprising software aggregation nodes, the
software defined
flow mapping comprising using flow handling to direct a data flow to a one of said software aggregation nodes aggregating data for a given virtual machine assigned to said flow, said directing comprising tunneling to cross an arbitrary network, said directing using one member of the group consisting of an application specific identifier and a protocol specific identifier.

3. The method of claim 2, comprising connecting respective hardware components to flow switches so that each virtual machine is associated with a given flow switch.

4. The method of claim 3, wherein said software defined flow mapping further comprises flow switching through said flow switches.

5. The method of claim 4 wherein the software defined flow mapping carries out flow handling by determining which network function virtual machine is assigned to which data flow and directing an incoming data flow to a flow switch associated with said respectively assigned virtual machine,

6. The method of claim 5,wherein said software aggregation nodes are connected by said flow switches and the software defined aggregation overlay further comprises distributed controllers.

7. The method of claim 6, wherein said addressing overlay comprises publish and subscribe functionality for updating of mapping changes, each node subscribing to a connected virtual machine to receive mapping updates concerning said respective virtual machine.

8. The method of claim 7, comprising providing an architecture of said addressing overlay that is accessible to all of said nodes.

9. The method of any preceding claim, wherein said SDN tier utilizes information of physical connections linking any one of said distributed nodes to any other of said distributed nodes,

10. The method of claim 9 wherein said SDN tier tracks round trip and delay between said distributed nodes.

11. An electronic network (10) using network functions to manage data flows on said network (10), the network (10) comprising:
a hardware layer (30) comprising hardware components;
a plurality of virtual machines (32) operating on respective ones of said hardware components and mobile between said hardware components, said virtual machines configured to implement respective network functions;
an addressing overlay (36) based on a location identity separation protocol (LISP) and above the hardware layer (30) of said network (10), wherein said addressing overlay (36) comprises a distributed hash table mapping service, said mapping
service being global to said electronic network (10) and wherein said addressing overlay is configured to provide identities to said virtual machines, said identities mapping to respective hardware locations on which said virtual machines currently reside, said mapping being updated upon moving of said virtual machines between hardware location so that said identities point to said new hardware locations of said virtual machines after said moving;
a tier (36) of software defined flow mapping ,SDN, based on a LISP architecture of said addressing overlay (36), said tier comprising a set of distributed nodes, each node holding a portion of the global mapping service, key-values being retrievable over said network by hashing a key comprising an ID of the virtual machine, to find one of said distributed nodes closest to, and in control of a given virtual machine, that holds a portion of said global mapping service associated with a given virtual machine, a flow controller (34) configured to direct said data flows around said network (10) via said virtual machines using software defined flow mapping, said flows being directed among said virtual machines using said moving identities.

12. The electronic network of claim 11, wherein the software defined flow mapping is provided in a software defined aggregation overlay comprising software aggregation nodes further comprising a flow handler configured to direct a data flow to a one of said software aggregation nodes aggregating data for a given virtual machine assigned to said flow, said directing comprising tunneling through an arbitrary network and being based on one member of the group consisting of an application specific identifier and a protocol specific identifier

13. The electronic network of claim 12 wherein said addressing overlay (36) comprises publish and subscribe functionality for updating of mapping changes, each node subscribing to a connected virtual machine to receive mapping updates concerning said respective virtual machine, and/or said apparatus comprises respective hardware components being connected to flow switches so that each virtual machine is associated with a given flow switch.

14. The electronic network (10) of claim 13, wherein said software defined flow mapping is configured to carry out flow handling, and flow switching through said flow switches, and/or said software defined flow mapping carries out flow handling by determining which network function virtual machine is assigned to which data flow and directing an incoming data flow to a flow switch associated with said respectively assigned virtual machine,

15. The electronic network of claim 14 wherein said software aggregation nodes are connected by said flow switches and the software defined aggregation overlay further comprises distributed controllers.

16. The electronic network (10) of any of claims 11 to 15, wherein said SDN tier is agnostic to the topology of said hardware layer (30), but having utilizable information of connections linking any one of said distributed nodes to any other of said distributed nodes.

17. The electronic network of claim 16 wherein said SDN tier tracks round trip and delay between said distributed nodes.

## Patentansprüche

1. Verfahren zum Betreiben eines elektronischen Netzwerks (10), wobei das Netzwerk eine Hardwareebene aufweist, die Hardwarekomponenten umfasst und Netzwerkfunktionen erfordert, wobei das Verfahren Folgendes umfasst:
Virtualisieren (12) von Netzwerkbildungsfunktionen bezüglich virtueller Maschinen;
Verwenden (14) einer Adressierungsüberlagerung, die auf einem Standortidentitätstrennungsprotokoll (*location identity separation protocol-* LISP) basiert, wobei die Adressierungsüberlagerung einen Abbildungsdienst für verteilte Hashtabellen verwendet, wobei der Abbildungsdienst global für das elektronische Netzwerk ist, und
über einer Hardwareebene des Netzwerks stellt die Adressierungsüberlagerung Identitäten der virtuellen Maschinen und ein globales Abbilden der Identitäten auf Hardwarestandorte bereit, an denen sich derzeit eine entsprechende virtuelle Maschine befindet;
Definieren einer Netzebene eines softwaredefinierten Flussabbildens, das auf einer LISP-Architektur der Adressierungsüberlagerung basiert, wobei das Definieren die Verwendung eines Satzes verteilter Knoten, das Platzieren eines Abschnitts des globalen Abbildungsdienstes, der von der Adressierungsüberlagerung bereitgestellt wird, an der Spitze jedes Knotens und das anschließende Abrufen von Schlüsselwerten durch Hashing eines Schlüssels umfasst, der eine ID der virtuellen Maschine umfasst, um einen der verteilten Knoten zu finden, der einer gegebenen virtuellen Maschine am nächsten liegt und die Kontrolle über dieselbe hat, die einen Abschnitt des globalen Abbildungsdienstes hält, der der gegebenen virtuellen Maschine zugehörig ist,
Bewegen (16) jeweiliger der virtuellen Maschinen um verschiedene Hardwarekomponenten des Netzwerks herum, wobei das Abbilden der Identitäten mit dem Bewegen der virtuellen Maschinen aktualisiert wird;
Leiten (18, 20, 22) von Datenströmen in dem Netzwerk über die virtuellen Maschinen unter Verwendung von softwaredefinierter Flussschaltung, wobei die Flüsse zwischen den sich bewegenden virtuellen Maschinen unter Verwendung der Identitäten geleitet werden.

2. Verfahren nach Anspruch 1, wobei das softwaredefinierte Flussabbilden in einer softwaredefinierten Aggregationsüberlagerung bereitgestellt wird, die Softwareaggregationsknoten umfasst, wobei das softwaredefinierte Flussabbilden die Verwendung einer Flussbearbeitung umfasst, um einen Datenfluss zu einem der Softwareaggregationsknoten zu leiten, der Daten für eine gegebene virtuelle Maschine aggregiert, die dem Fluss zugeordnet ist, wobei das Leiten ein Tunneln zum Durchqueren eines beliebigen Netzwerks umfasst, wobei das Leiten ein Element der Gruppe verwendet, die aus einem anwendungsspezifischen Bezeichner und einem protokollspezifischen Bezeichner besteht.

3. Verfahren nach Anspruch 2, wobei die jeweiligen Hardwarekomponenten mit Flussschaltern verbunden werden, so dass jede virtuelle Maschine einem bestimmten Flussschalter zugehörig ist.

4. Verfahren nach Anspruch 3, wobei das softwaredefinierte Flussabbilden ferner eine Flussschaltung durch die Flussschalter umfasst.

5. Verfahren nach Anspruch 4, wobei das softwaredefinierte Flussabbilden eine Flussbearbeitung durch Bestimmen, welche virtuelle Maschine mit Netzwerkfunktion welchem Datenfluss zugeordnet ist, und durch Leiten eines eingehenden Datenflusses zu einem der jeweils zugehörigen virtuellen Maschine zugeordneten Flussschalter durchführt,

6. Verfahren nach Anspruch 5, wobei die Softwareaggregationsknoten durch die Flussschalter verbunden ist, und die softwaredefinierte Aggregationsüberlagerung ferner verteilte Steuervorrichtungen umfasst.

7. Verfahren nach Anspruch 6, wobei die Adressierungsüberlagerung eine Publish- und Subscribe-Funktionalität für eine Aktualisierung von Abbildungsänderungen umfasst, wobei jeder Knoten bei einer angeschlossenen virtuellen Maschine angemeldet ist, um Abbildungsaktualisierungen bezüglich der jeweiligen virtuellen Maschine zu erhalten.

8. Verfahren nach Anspruch 7, das das Bereitstellen einer Architektur der Adressierungsüberlagerung umfasst, die für alle Knoten zugänglich ist.

9. Verfahren nach einem der vorhergehenden Ansprüche, wobei die SDN-Netzebene Informationen physischer Verbindungen nutzt, die einen der verteilten Knoten mit einem anderen der verteilten Knoten verknüpfen.

10. Verfahren nach Anspruch 9, wobei die SDN-Netzebene die Umlaufzeit und die Verzögerung zwischen den verteilten Knoten verfolgt.

11. Elektronisches Netzwerk (10), das Netzwerkfunktionen zum Verwalten von Datenflüssen auf dem Netzwerk (10) verwendet, wobei das Netzwerk (10) Folgendes umfasst:
eine Hardwareebene (30), die Hardwarekomponenten umfasst;
mehrere virtuelle Maschinen (32), die auf jeweiligen der Hardwarekomponenten betrieben werden und zwischen den Hardwarekomponenten mobil sind, wobei die virtuellen Maschinen konfiguriert sind, um die jeweiligen Netzwerkfunktionen zu implementieren;
eine Adressierungsüberlagerung (36), die auf einem Standortidentitätstrennungsprotokoll (LISP) basiert und über der Hardwareebene (30) des Netzwerks (10) liegt, wobei die Adressierungsüberlagerung (36) einen Abbildungsdienst für verteilte Hashtabellen umfasst, wobei der Abbildungsdienst global für das elektronische Netzwerk (10) ist und wobei die Adressierungsüberlagerung konfiguriert ist, um Identitäten für die virtuellen Maschinen bereitzustellen, wobei die Identitäten auf die jeweiligen Hardwarestandorte abbilden, auf denen sich die virtuellen Maschinen derzeit befinden, wobei das Abbilden beim Bewegen der virtuellen Maschinen zwischen Hardwarestandorten aktualisiert wird, so dass die Identitäten auf die neuen Hardwarestandorte der virtuellen Maschinen nach dem Bewegen zeigen;
eine Netzebene (36) von softwaredefiniertem Flussabbilden, SDN, die auf einer LISP-Architektur der Adressierungsüberlagerung (36) basiert, wobei die Netzebene Folgendes umfasst: einen Satz verteilter Knoten, wobei jeder Knoten einen Abschnitt des globalen Abbildungsdienstes hält, Schlüsselwerte, die über das Netzwerk durch Hashing eines Schlüssels, der eine ID der virtuellen Maschine umfasst, abrufbar sind, um einen der verteilten Knoten zu finden, der einer gegebenen virtuellen Maschine am nächsten liegt und die Kontrolle über dieselbe hat, die einen Abschnitt des globalen Abbildungsdienstes enthält, der einer gegebenen virtuellen Maschine zugehörig ist, eine Flusssteuervorrichtung (34), die konfiguriert ist, um die Datenflüsse in dem Netzwerk (10) über die virtuellen Maschinen unter Verwendung eines softwaredefinierten Flussabbildens zu lenken, wobei die Flüsse zwischen den virtuellen Maschinen unter Verwendung der sich bewegenden Identitäten gelenkt werden.

12. Elektronisches Netzwerk nach Anspruch 11, wobei das softwaredefinierte Flussabbilden in einer softwaredefinierten Aggregationsüberlagerung bereitgestellt wird, die Softwareaggregationsknoten umfasst, die ferner einen Flussbearbeiter umfasst, der konfiguriert ist, um einen Datenfluss zu einem der Softwareaggregationsknoten zu leiten, der Daten für eine gegebene virtuelle Maschine aggregiert, die dem Fluss zugeordnet ist, wobei das Leiten das Tunneln durch ein beliebiges Netzwerk umfasst und auf einem Element der Gruppe basiert, die aus einem anwendungsspezifischen Bezeichner und einem protokollspezifischen Bezeichner besteht.

13. Elektronisches Netzwerk nach Anspruch 12, wobei die Adressierungsüberlagerung (36) eine Publish- und Subscribe-Funktionalität zum Aktualisieren von Abbildungsänderungen umfasst, wobei jeder Knoten bei einer angeschlossenen virtuellen Maschine angemeldet ist, um Abbildungsaktualisierungen bezüglich der jeweiligen virtuellen Maschine zu erhalten, und/oder die Einrichtung jeweilige Hardwarekomponenten umfasst, die mit Flussschaltern verbunden sind, so dass jede virtuelle Maschine einem gegebenen Flussschalter zugehörig ist.

14. Elektronisches Netzwerk (10) nach Anspruch 13, wobei das softwaredefinierte Flussabbilden konfiguriert ist, um eine Flussbearbeitung durchzuführen, und die Flussschaltung durch die Flussschalter und/oder das softwaredefinierte Flussabbilden eine Flussbearbeitung durchführt, indem bestimmt wird, welche virtuelle Maschine mit Netzwerkfunktion welchem Datenfluss zugeordnet ist, und indem ein eingehender Datenfluss zu einem Flussschalter geleitet wird, der der jeweils zugehörigen virtuellen Maschine zugeordnet ist.

15. Elektronisches Netzwerk nach Anspruch 14, wobei die Softwareaggregationsknoten durch die Flussschalter verbunden sind und die softwaredefinierte Aggregationsüberlagerung ferner verteilte Steuervorrichtungen umfasst.

16. Elektronisches Netzwerk (10) nach einem der Ansprüche 11 bis 15, wobei die SDN-Netzebene von der Topologie der Hardwareebene (30) unabhängig ist, aber verwendbare Informationen über Verbindungen aufweist, die einen beliebigen der verteilten Knoten mit einem beliebigen anderen der verteilten Knoten verknüpfen.

17. Elektronisches Netzwerk nach Anspruch 16, wobei die SDN-Netzebene die Umlaufzeit und die Verzögerung zwischen den verteilten Knoten verfolgt.

## Revendications

1. Procédé d'exploitation d'un réseau électronique (10), le réseau comportant une couche matérielle comprenant des composants matériels et nécessitant des fonctions de mise en réseau, le procédé comprenant :
la virtualisation (12) des fonctions de mise en réseau vers des machines virtuelles ;
l'utilisation (14) d'une superposition d'adressage basée sur un protocole de séparation d'identité et de localisation, LISP, ladite superposition d'adressage utilisant un service de mappage de table de hachage distribué, ledit service de mappage étant global sur ledit réseau électronique et
au-dessus d'une couche matérielle dudit réseau, ladite superposition d'adressage fournissant des identités desdites machines virtuelles et un mappage global desdites identités aux localisations matérielles où réside actuellement une machine virtuelle respective ;
la définition d'un niveau de mappage de flux défini par logiciel basé sur une architecture de LISP de la superposition d'adressage, ladite définition comprenant l'utilisation d'un ensemble de nœuds distribués, le placement, au sommet de chaque nœud, d'une partie du service de mappage global fourni par la superposition d'adressage, puis la récupération des valeurs-clés par hachage d'une clé comprenant un identifiant de la machine virtuelle pour trouver l'un desdits nœuds distribués le plus proche et en commande d'une machine virtuelle donnée qui détient une partie dudit service de mappage global associé à la machine virtuelle donnée,
le déplacement (16) de machines virtuelles respectives desdites machines virtuelles autour de différents composants matériels dudit réseau, le mappage desdites identités étant mis à jour par ledit déplacement desdites machines virtuelles ;
la direction (18, 20, 22) des flux de données autour dudit réseau par l'intermédiaire desdites machines virtuelles à l'aide d'une commutation de flux définie par logiciel, lesdits flux étant dirigés parmi lesdites machines virtuelles en déplacement à l'aide desdites identités.

2. Procédé selon la revendication 1, dans lequel le mappage de flux défini par logiciel est fourni dans une superposition d'agrégation définie par logiciel comprenant des nœuds d'agrégation de logiciel, le mappage de flux défini par logiciel comprenant l'utilisation de la gestion de flux pour diriger un flux de données vers l'un des nœuds d'agrégation de logiciel agrégeant les données pour une machine virtuelle donnée affectée audit flux, ladite direction comprenant une tunnelisation pour traverser un réseau arbitraire, ladite direction utilisant un membre du groupe constitué d'un identifiant propre à l'application et un identifiant propre au protocole.

3. Procédé selon la revendication 2, comprenant la connexion de composants matériels respectifs à des commutateurs de flux pour que chaque machine virtuelle soit associée à un commutateur de flux donné.

4. Procédé selon la revendication 3, dans lequel ledit mappage de flux défini par logiciel comprend en outre une commutation de flux à travers lesdits commutateurs de flux.

5. Procédé selon la revendication 4, dans lequel le mappage de flux défini par logiciel effectue une gestion de flux en déterminant quelle machine virtuelle de fonction de mise en réseau est affectée à quel flux de données et en dirigeant un flux de données entrant vers un commutateur de flux associé à ladite machine virtuelle respectivement affectée,

6. Procédé selon la revendication 5, dans lequel lesdits nœuds d'agrégation logicielle sont connectés par lesdits commutateurs de flux et où la superposition d'agrégation définie par logiciel comprend en outre des dispositifs de commande distribués.

7. Procédé selon la revendication 6, dans lequel ladite superposition d'adressage comprend une fonctionnalité de publication et d'abonnement pour la mise à jour des modifications de mappage, chaque nœud s'abonnant à une machine virtuelle connectée pour recevoir des mises à jour de mappage concernant ladite machine virtuelle respective.

8. Procédé selon la revendication 7, comprenant l'utilisation d'une architecture de ladite superposition d'adressage accessible à tous lesdits nœuds.

9. Procédé selon l'une quelconque des revendications précédentes, dans lequel ledit niveau de SDN utilise des informations de connexions physiques reliant l'un quelconque desdits nœuds distribués à tout autre nœud desdits nœuds distribués.

10. Procédé selon la revendication 9, dans lequel ledit niveau de SDN suit l'aller-retour et le retard entre lesdits nœuds distribués.

11. Réseau électronique (10) utilisant des fonctions de mise en réseau pour gérer les flux de données sur ledit réseau (10), le réseau (10) comprenant :
une couche matérielle (30) comprenant des composants matériels ;
une pluralité de machines virtuelles (32) fonctionnant sur des composants respectifs desdits composants matériels et mobiles entre lesdits composants matériels, lesdites machines virtuelles étant configurées pour mettre en œuvre des fonctions de réseau respectives ;
une superposition d'adressage (36) basée sur un protocole de séparation d'identité et de localisation (LISP) et au-dessus de la couche matérielle (30) dudit réseau (10), ladite superposition d'adressage (36) comprenant un service distribué de mappage de table de hachage, ledit service de mappage étant global pour ledit réseau électronique (10) et ladite superposition d'adressage étant configurée pour fournir des identités auxdites machines virtuelles, lesdites identités étant mappées aux localisations matérielles respectives sur lesquelles résident actuellement lesdites machines virtuelles, ledit mappage étant mis à jour lors du déplacement desdites machines virtuelles entre la localisation matérielle pour que lesdites identités pointent vers les nouvelles localisations matérielles desdites machines virtuelles après ledit déplacement ;
un niveau (36) de mappage de flux défini par logiciel, SDN, basé sur une architecture de LISP de ladite superposition d'adressage (36), ledit niveau comprenant un ensemble de nœuds distribués, chaque nœud contenant une partie du service de mappage global, les valeurs-clés étant récupérables sur ledit réseau par hachage d'une clé comprenant un identifiant de la machine virtuelle, pour trouver l'un desdits nœuds distribués le plus proche et sous la commande d'une machine virtuelle donnée, qui détient une partie dudit service de mappage global associé à une machine virtuelle donnée, un dispositif de commande de flux (34) configuré pour diriger lesdits flux de données autour dudit réseau (10) par l'intermédiaire desdites machines virtuelles à l'aide d'un mappage de flux défini par logiciel, lesdits flux étant dirigés parmi lesdites machines virtuelles à l'aide desdites identités mobiles.

12. Réseau électronique selon la revendication 11, dans lequel le mappage de flux défini par logiciel est fourni dans une superposition d'agrégation définie par logiciel comprenant des nœuds d'agrégation de logiciel comprenant en outre un gestionnaire de flux configuré pour diriger un flux de données vers l'un desdits nœuds d'agrégation de logiciel regroupant des données pour une machine virtuelle donnée affectée audit flux, ladite direction comprenant la tunnellisation à travers un réseau arbitraire et étant basée sur un membre du groupe constitué d'un identifiant propre à l'application et d'un identifiant propre au protocole

13. Réseau électronique selon la revendication 12, dans lequel ladite superposition d'adressage (36) comprend une fonctionnalité de publication et d'abonnement pour la mise à jour des modifications de mappage, chaque nœud s'abonnant à une machine virtuelle connectée pour recevoir des mises à jour de mappage concernant ladite machine virtuelle respective et/ou dans lequel ledit appareil comprend des composants matériels respectifs connectés à des commutateurs de flux pour que chaque machine virtuelle soit associée à un commutateur de flux donné.

14. Réseau électronique (10) selon la revendication 13, dans lequel ledit mappage de flux défini par logiciel est configuré pour effectuer une gestion de flux et une commutation de flux à travers lesdits commutateurs de flux, et/ou dans lequel ledit mappage de flux défini par logiciel effectue une gestion de flux en déterminant quelle machine virtuelle de fonction de réseau est affectée à quel flux de données et en dirigeant un flux de données entrant vers un commutateur de flux associé à ladite machine virtuelle respectivement affectée,

15. Réseau électronique selon la revendication 14, dans lequel lesdits nœuds d'agrégation de logiciel sont connectés par lesdits commutateurs de flux et où la superposition d'agrégation définie par logiciel comprend en outre des dispositifs de commande distribués.

16. Réseau électronique (10) selon l'une quelconque des revendications 11 à 15, dans lequel ledit niveau de SDN est indépendant de la topologie de ladite couche matérielle (30), mais dispose d'informations utilisables de connexions reliant l'un quelconque desdits nœuds distribués à tout autre desdits nœuds distribués.

17. Réseau électronique selon la revendication 16, dans lequel ledit niveau de SDN suit l'aller-retour et le retard entre lesdits nœuds distribués.
